Europäisches Patentamt

(19) European Patent Office

Office européen des brevets

(11) Numéro de publication : **0 287 435 B1**

(12) **FASCICULE DE BREVET EUROPEEN**

(45) Date de publication du fascicule du brevet :
26.06.91 Bulletin 91/26

(51) Int. Cl.$^5$ : **F02M 31/16**

(21) Numéro de dépôt : **88400833.5**

(22) Date de dépôt : **06.04.88**

(54) **Dispositif de perfectionnement à l'alimentation des moteurs diesel aux basses températures.**

(30) Priorité : **08.04.87 FR 8704930**

(43) Date de publication de la demande :
**19.10.88 Bulletin 88/42**

(45) Mention de la délivrance du brevet :
**26.06.91 Bulletin 91/26**

(84) Etats contractants désignés :
**AT CH DE LI SE**

(56) Documents cités :
**EP-A- 0 069 639**
**EP-A- 0 085 590**
**EP-A- 0 120 733**
**DE-A- 3 442 980**

(56) Documents cités :
**SOVIET INVENTIONS ILLUSTRATED, Section Q, semaine C45, 17 décembre 1980, résumé no. K8128, Derwent Publications LTD, Londres, GB ; & SU-A-723 203 (ODESS TRACT. RES.) 25-03-1980**

(73) Titulaire : **ELF FRANCE, Société Anonyme dite:**
**Tour Elf 2 place de la Coupole La Défense 6**
**F-92400 Courbevoie (FR)**

(72) Inventeur : **Fayard, Jean-Claude**
**15bis, rue Montbrilland**
**F-69003 Lyon (FR)**

(74) Mandataire : **Boillot, Marc**
**SOCIETE NATIONALE ELF AQUITAINE**
**Division Propriété Industrielle Tour Elf**
**F-92078 Paris la Défense Cédex 45 (FR)**

### Description

La présente invention concerne un dispositif de perfectionnement à l'alimentation des moteurs diesel aux basses températures, notamment aux températures inférieures au point de trouble des gasoils, sans modifications des caractéristiques chimiques spécifiques du gasoil.

L'utilisation du gasoil dans les moteurs diesel aux températures inférieures à la température de point de trouble fait apparaitre un certain nombre de problèmes de fonctionnement liés au colmatage du filtre à combustible. Le point de trouble correspond à la température où une cristallisation des paraffines apparaît au sein du gasoil. Pour des températures inférieures à cette température de point de trouble, si aucun moyen de réchauffage n'est mis en place, ces paraffines seront arrêtées par le filtre à combustible, lors du fonctionnement du moteur, et se concentreront jusqu'au colmatage de celui-ci, entraînant ainsi un arrêt du moteur par défaut d'alimentation.

Une solution pour remédier à ces inconvénients est de faire évoluer les spécifications du gasoil moteur en fonction des saisons, c'est-à-dire le point de trouble, le point d'écoulement, et la température limite de filtrabilité. Pour des raisons économiques, les gasoils ne présentent jamais les caractéristiques suffisantes pour répondre aux exigences de fonctionnement imposées par les températures les plus basses observées. Ainsi, si l'on veut éliminer tous les problèmes de fonctionnement des moteurs diesel aux basses températures, des dispositifs de réchauffage devront être associés.

Un dispositif de réchauffage par recyclage du débit excédentaire de gasoil de la pompe à injection, dit "débit de balayage", en amont du filtre à carburant, à l'aide d'une vanne thermostatique est divulgué dans la demande de brevet français 2 456 223, déposée au nom de ELF UNION. Dans ce dispositif, après un court temps de fonctionnement du moteur, le gasoil provenant du débit de balayage a atteint une température suffisante pour que, mélangé au gasoil provenant du réservoir, le mélange soit envoyé sur la pompe à injection aux environs de 25 degrés Celsius. L'élément thermostatique régule alors le débit de balayage, de façon à maintenir la température constante en recyclant une plus ou moins grande quantité de gasoil au réservoir. Pour les températures supérieures à 25 degrés Celsius, l'élément thermostatique recycle tout le débit de balayage en direction du réservoir. Dans ces circonstances, le gasoil, encore à des températures proches du point de trouble dans le réservoir, sera envoyé directement du réservoir vers l'élément thermostatique, le filtre puis la pompe haute pression, ce qui provoque un phénomène oscillatoire qui ralentit encore le réchauffement du gasoil contenu dans le réservoir.

Il est également connu, par la demande de brevet français 2 256 323, un dispositif de préchauffage de gasoil par les gaz d'échappement du moteur dans un échangeur avant de l'introduire dans la pompe à injection. Toutefois, ce dispositif joue le même rôle que le dispositif précédent utilisant le débit de balayage et ne solutionne pas le problème de réchauffage du gasoil du réservoir et du refroidissement de la pompe à injection par le débit de balayage.

Le document EP-A-0085590 décrit un dispositif de perfectionnement de l'alimentation des moteurs diesel aux basses températures, notamment aux températures inférieures au point de trouble des gas-oils, sans modifications des caractéristiques chimiques spécifiques du gas-oil par recyclage du débit de balayage de pompe à injection. Ce recyclage s'effectue, soit en amont du filtre à combustible et se trouve associé à une recirculation vers le réservoir du gas-oil provenant du réservoir à travers un échangeur de chaleur, soit directement en direction du réservoir, ledit recyclage étant commandé par un thermo-élément.

La présente invention a pour but de proposer un perfectionnement à ce type de dispositif utilisant le principe du recyclage du débit de balayage, tout en remédiant aux inconvénients cités ci-dessus.

Pour ce faire, l'invention propose un dispositif de perfectionnement de l'alimentation des moteurs diesel aux basses températures, notamment aux températures inférieures au point de trouble des gasoils, sans modifications des caractéristiques chimiques spécifiques du gasoil par recyclage du débit de balayage de la pompe à injection, ce recyclage s'effectuant, soit en amont du filtre à combustible et se trouve associé à une recirculation vers le réservoir du gasoil provenant du réservoir à travers un échangeur de chaleur, soit directement en direction du réservoir, ledit recyclage étant commandé par un thermo-élément caractérisé en ce qu'il comprend une alimentation directe du filtre par le réservoir pendant la recirculation directe en direction du réservoir, et en ce que le thermo-élément est un élément thermo-électrique placé en sortie du réservoir et commandant la mise en oeuvre d'une pompe de surpression assurant, d'une part par l'ouverture d'un clapet le recyclage du débit de balayage en amont du filtre, d'autre part la recirculation vers le réservoir du gasoil provenant, à travers l'échangeur de chaleur, du réservoir.

D'autres avantages et caractéristiques de la présente invention apparaîtront plus clairement à la lecture de la description ci-après, faite en référence aux dessins annexés dans lesquels :

- la figure 1 représente, schématiquement, le perfectionnement selon l'invention dans son mode de fonctionnement lors de la phase de réchauffement du gasoil,
- la figure 2 représente le perfectionnement selon l'invention dans son mode de fonctionnement lorsque l'ensemble du gasoil du réservoir a été réchauffé, -

– la figure 3 représente une amélioration au perfectionnement selon l'invention.

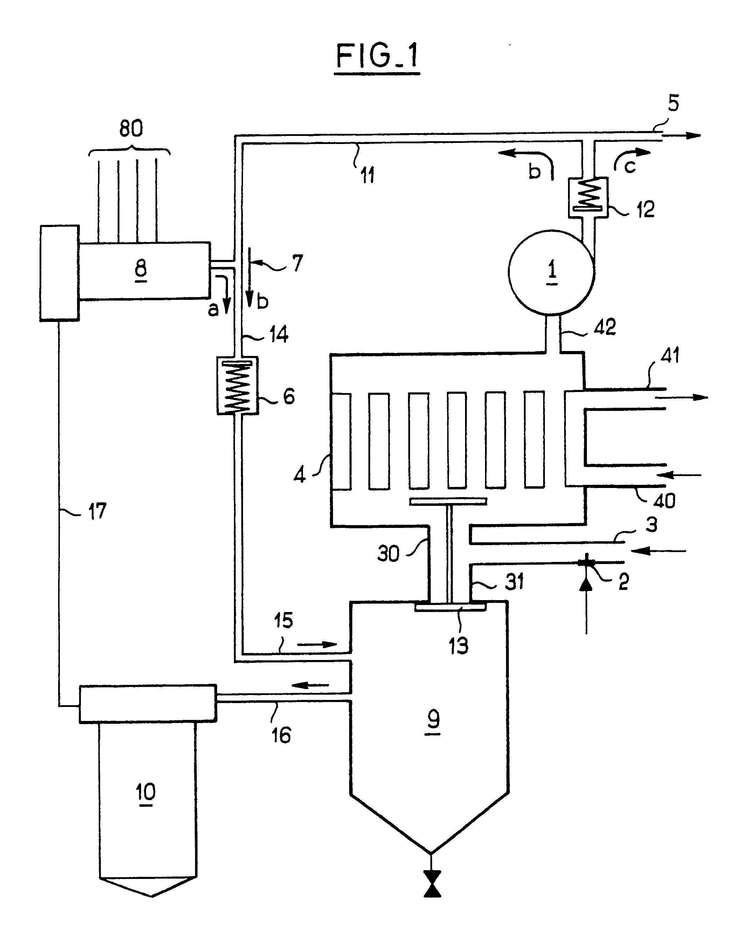

La figure 1 représente l'ensemble du dispositif constituant le perfectionnement selon l'invention et comportant une canalisation 3 du gasoil contenu dans un réservir non représenté vers, soit un échangeur 4 par une canalisation 30, soit un pot de mélange 9 par une canalisation 31. La sélection de l'introduction du gasoil dans l'échangeur 4 ou dans le pot de mélange 9 s'effectue par un clapet différentiel 13. Une canalisation 40 amène l'eau de circulation du moteur à l'échangeur 4, tandis qu'une canalisation 41 évacue cette eau de circulation. Une sortie 42 de l'échangeur 4 est reliée à l'entrée d'une pompe de surpression 1 dont la sortie est reliée par l'intermédiaire d'un premier clapet anti-retour 12 à une première canalisation 11 et une deuxième canalisation 5. La deuxième canalisation 5 se trouve en communication avec le réservoir de gasoil. La première canalisation 11 met en communication la pompe 1 avec la sortie 7 de débit de balayage d'une pompe haute pression 8 dite pompe d'injection. Cette pompe d'injection 8 délivre, sur ses canalisations 80, le gasoil qui est envoyé vers les injecteurs non représentés. La sortie de balayage 7 se trouve en communication par une canalisation 14 avec un deuxième clapet anti-retour 6 et reliée par une canalisation 15 au pot de mélange 9. Ce clapet anti-retour 6 met en communication la sortie de balayage 7 avec le pot de mélange 9 lorsqu'une surpression suffisante est présente dans la canalisation 14 Le pot de mélange 9 communique par une canalisation 16 avec un filtre 10 qui se trouve lui-même en communication, par la canalisation 17, avec la pompe à injection 8. Enfin, un élément thermo-électrique 2 disposé dans la canalisation 3 permet de commander la mise en route de la pompe 1 en fonction de la température du gasoil circulant dans la canalisation 3.

Le fonctionnement du dispositif est le suivant :

La pompe électrique 1, commandée par l'élément thermo-électrique 2 disposé sur la canalisation d'arrivée du gasoil 3 commande en dessous d'une certaine température proche du point de trouble la circulation du gasoil froid à travers l'échangeur 4 pour le réchauffer par l'eau de refroidissement du moteur. Le gasoil provenant de l'échangeur 4 est recyclé, d'une part au réservoir selon la flèche c par la canalisation de retour 5, d'autre part en direction de la sortie de balayage 7 suivant la flèche b. La surpression en sortie de la pompe 1 assure l'ouverture des deux clapets 12 et 6. Le deuxième clapet 6 permet au débit de balayage provenant de la sortie 7 de la pompe d'injection 8 de circuler selon la flèche a en se mélangeant au gasoil provenant de l'échangeur 4 et représenté par la flèche b. Ce mélange est recyclé dans le pot mélangeur 9 en amont du filtre 10 puisque lors du fonctionnement de la pompe 1, le clapet 13 est dans la position représentée à la figure 1 qui interdit l'alimentation directe à partir du réservoir par les canalisations 3 et 31, du pot 9. Ainsi, dans ce mode de fonctionnement de l'invention, correspondant au démarrage du moteur, le gasoil correspondant à la consommation du moteur sera apporté par la canalisation 11 grâce à la pression de sortie de la pompe électrique 1 tandis que l'important débit de recyclage en sortie 7 de la pompe d'injection 8 vient se mélanger avec ce gasoil pour assurer le réchauffement de ce dernier et le recycle en amont du filtre 10. De cette façon, le colmatage du filtre sera d'autant moins rapide que, seul le gasoil consommé par le moteur sera chargé de paraffine cristallisée. Dans ce fonctionnement, le gasoil correspondant au débit de balayage et réchauffé par son passage dans la pompe d'injection 8 est utilisé pour réchauffer le gasoil provenant de la pompe électrique 1. D'autre part, le gasoil provenant du réservoir par la pompe électrique 1 sera progressivement réchauffé par l'eau de circulation du moteur.

Au fur et à mesure que la température de l'eau de refroidissement du moteur s'élèvera, le gasoil se réchauffera et une partie de celui-ci sera recyclé vers le réservoir pour réchauffer le gasoil dans le réservoir. Ceci permet de passer au-dessus de la température du point de trouble et d'éliminer durablement le problème de colmatage du filtre 10.

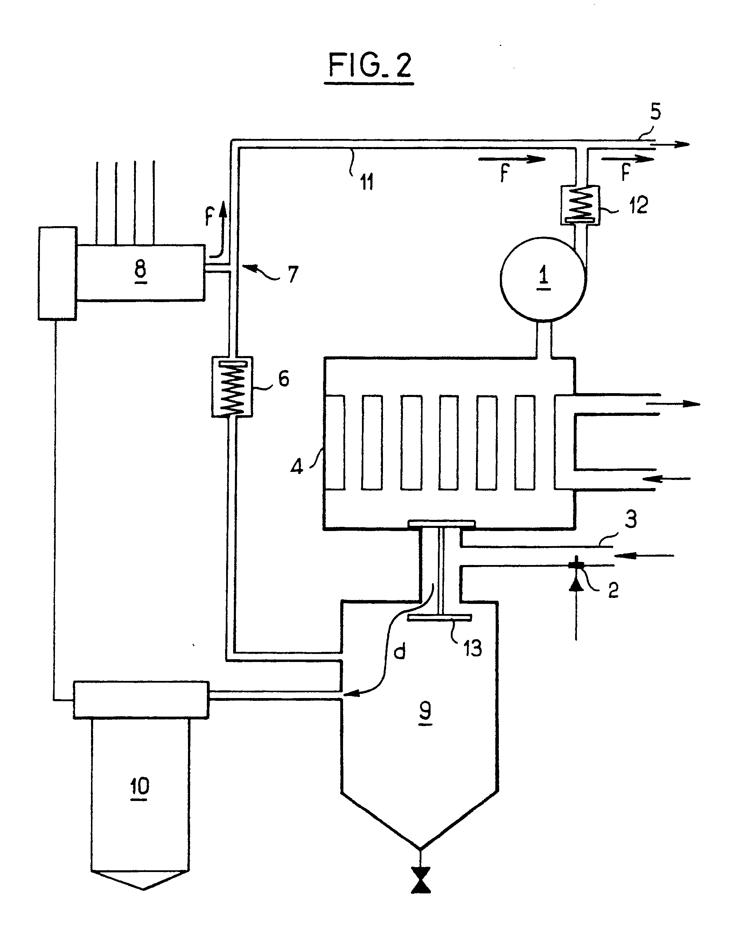

La figure 2 représente le fonctionnement du dispositif, dès que la température d'arrivée du gasoil au niveau du thermo-contact 2 dépasse 10 degrés Celsius. Dans ce cas, la pompe de circulation 1 s'arrête de fonctionner, le clapet 13, par les pressions différentielles, obstrue la communication de la canalisation 30 avec l'échangeur 4 et l'alimentation se fait de manière classique, représentée par la flèche d. Le gasoil provenant du réservoir par la canalisation 3 passe directement dans le pot mélangeur 9 pour aller dans le filtre à combustible 10. Le fluide délivré par la sortie de balayage 7 ne sort pas à une pression suffisante pour ouvrir le deuxième clapet 6 et va circuler dans la canalisation 11 suivant la flèche f pour retourner vers le réservoir. Le premier clapet 12 interdit tout repassage du débit de retour, représenté par la flèche f, vers la pompe de surpression 1. De cette façon, en sortie de la pompe à injection 8, le débit de balayage ne peut aller que vers la canalisation 11 puis vers la canalisation 5 pour retourner au réservoir, puisque le deuxième clapet 6 empêche le recyclage, par suite de l'absence de surpression. L'échangeur 4 ainsi isolé du reste du circuit ne permet pas de réchauffer le gasoil dans cette configuration. Par ailleurs, on notera que la pompe de circulation 1, sera choisie pour avoir un débit permettant une rotation complète du réservoir en une heure de façon à permettre le réchauffement du fluide contenu par ce dernier dans le même temps.

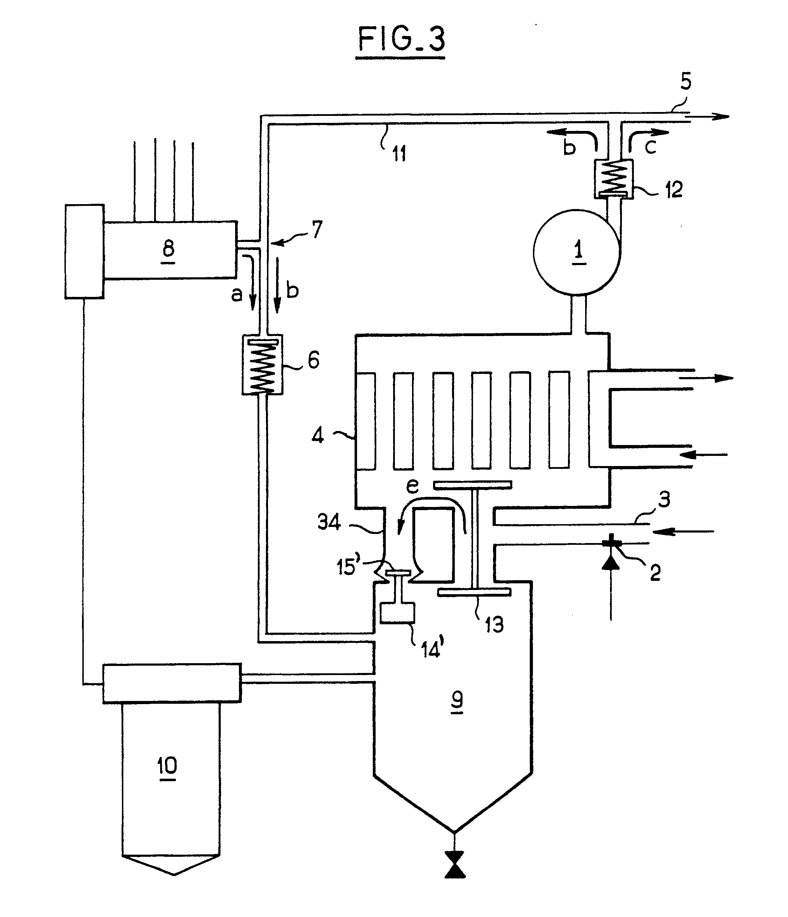

La figure 3 représente une variante de l'invention qui diffère de la réalisation des figures 1 et 2 par le fait qu'une canalisation 34, mettant en liaison l'échangeur 4 avec le pot mélangeur 9, est obturée par un clapet 15' commandé par une vanne thermostatique 14'.

Par suite de cette modification, le fonctionnement du dispositif de l'invention est le suivant.

Si le recyclage du débit de balayage entraîne une température excessive dans le pot mélangeur 9 et par conséquent une surchauffe de la pompe d'injection 8, l'élément thermostatique 14' commande l'ouverture du clapet 15' pour supprimer temporairement le recyclage tant que celui-ci est en fonctionnement. L'ouverture du clapet 15' permet l'alimentation directe par le gasoil provenant de l'échangeur 4 suivant la flèche e. L'élément thermostatique 14' sera réglé de manière que l'ouverture du clapet 15' soit complète à 30 degrés Celsius.

Cette variante permet donc d'assurer, quelles que soient les conditions, une température d'alimentation de la pompe à injection constante et de maintenir ainsi les performances du véhicule.

De cette façon, par les moyens décrits ci-dessus, on permet d'une part le refroidissement de la pompe d'injection 8, d'autre part, le réchauffement par le débit de balayage du gasoil d'injection dans la phase de démarrage et enfin, le réchauffement de l'ensemble du gasoil contenu dans le circuit et le réservoir, sans provoquer d'échauffement de la pompe d'injection ou de phénomènes oscillatoires.

## Revendications

1. Dispositif de perfectionnement de l'alimentation des moteurs diesel aux basses températures, notamment aux températures inférieures au point de trouble des gasoils, sans modifications des caractéristiques chimiques spécifiques du gasoil par recyclage du débit de balayage de la pompe à injection, ce recyclage s'effectuant, soit en amont du filtre à combustible (10) et se trouve associé à une recirculation vers le réservoir du gasoil provenant du réservoir à travers un échangeur (4) de chaleur, soit directement en direction du réservoir, ledit recyclage étant commandé par un thermo-élément (2) caractérisé en ce qu'il comprend une alimentation directe du filtre (10) par le réservoir pendant la recirculation directe en direction du réservoir, et en ce que le thermo-élément (2) est un élément thermo-électrique placé en sortie du réservoir et commandant la mise en oeuvre d'une pompe de surpression (1) assurant, d'une part par l'ouverture d'un clapet (6) le recyclage du débit de balayage en amont du filtre (10), d'autre part la recirculation vers le réservoir du gasoil provenant, à travers l'échangeur de chaleur (4), du réservoir.

2. Dispositif de perfectionnement selon la revendication 1 caractérisé en ce qu'un clapet différentiel (13) met en communication le réservoir, soit avec l'échangeur (4), soit directement avec le filtre (10).

3. Dispositif de perfectionnement selon la revendication 2 caractérisé en ce qu'un clapet anti-retour (12) est disposé entre la pompe de surpression (1) et une canalisation de retour (5, 11) au réservoir relié à la sortie de balayage (7) de la pompe à injection (8).

4. Dispositif de perfectionnement selon une des revendications précédentes, caractérisé en ce que un élément thermostatique (14') commande un clapet (15') pour mettre en communication directe l'échangeur (4) avec le filtre (10) par une canalisation (34).

## Ansprüche

1. Vorrichtung zur Verbesserung der Beschickung von Dieselmotoren bei niedrigen Temperaturen, insbesondere bei Temperaturen unterhalb des Trübungspunktes der Dieselöle, ohne Modifizierungen der spezifischen chemischen Eigenschaften des Dieselöls, durch Rückführung des Spüldurchsatzes der Einspritzpumpe, wobei diese Rückführung entweder stromauf vom Kraftstoffilter (10) und in Zuordnung zu einer Rezirkulation zu dem Speicher des Dieselöls hin, das aus dem Speicher über einen Wärmeaustauscher (4) kommt, oder direkt in Richtung des Speichers erfolgt, wobei die Rückführung von einem Thermo-Bauteil (2) gesteuert wird, dadurch **gekennzeichnet**, daß sie eine direkte Beschickung des Filters (10) durch den Speicher während der direkten Rezirkulation in Richtung des Speichers aufweist und daß das Thermo-Bauteil (2) ein thermoelektrisches Element ist, das am Ausgang des Speichers angeordnet ist und die Inbetriebnahme einer Überdruckpumpe (1) steuert, welche einerseits durch Öffnen eines Ventils (6) die Rückführung des Spüldurchsatzes stromauf vom Filter (10) und andererseits die Rezirkulation zum Speicher des Dieselöls hin gewährleistet, das über den Wärmeaustauscher (4) aus dem Speicher kommt.

2. Vorrichtung zur Verbesserung nach Anspruch 1, dadurch **gekennzeichnet**, daß ein Differentialventil (13) den Speicher entweder mit dem Austauscher (4) oder direkt mit dem Filter (10) in Verbindung setzt.

3. Vorrichtung zur Verbesserung nach Anspruch 2, dadurch **gekennzeichnet**, daß zwischen die Überdruckpumpe (1) und einen Rücklaufkanal (5, 11) für den Speicher, der mit dem Spülungsausgang (7) der Einspritzpumpe (8) verbunden ist, ein Rückschlagventil (12) angeordnet ist.

4. Vorrichtung zur Verbesserung nach einem der vorhergehenden Ansprüche, dadurch **gekennzeichnet**, daß ein thermostatisches Element (14') ein Ventil (15') steuert, um den Austauscher (4) mit dem Filter (10) über eine Leitung (34) in eine direkte Verbindung zu setzen.

## Claims

1. Device for improving the fuel supply of diesel engines at low temperatures, in particular at temperatures lower than the cloud point of diesel fuels, without modifying the specific chemical properties of the diesel fuel by recycling the scavenging output of the fuel injection pump, this recycling process being carried out either upstream of the fuel filter (10) and being associated with a recirculation to the tank of the diesel fuel from the tank via a heat exchanger (4), or directly to the tank, the said recycling process being controlled by a thermo-element (2), characterised in that it comprises a direct supply to the filter (10) via the tank during the direct recirculation process to the tank, and in that the thermo-element (2) is a thermoelectric element located at the tank outlet and controlling the operation of an excess pressure pump (1) which, on the one hand, recycles the scavenging output upstream of the filter (10) by opening a valve (6) and, on the other hand, recirculates to the tank the diesel fuel coming from the tank via the heat exchanger (4).

2. Improvement device according to claim 1, characterised in that a differential valve (13) connects the tank either to the heat exchanger (4) or directly to the filter (10).

3. Improvement device according to claim 2, characterised in that a non-return valve (12) is disposed between the excess pressure pump (1) and a return pipe (5, 11) to the tank connected to the scavenging output (7) of the injection pump (8).

4. Improvement device according to any one of the preceding claims, characterised in that a thermostatic element (14') controls a valve (15') in order to connect the heat exchanger (4) directly to the filter (10) by a pipe (34).

# FIG. 1

# FIG. 2

# FIG. 3